# EUROPEAN PATENT APPLICATION

(11) **EP 4 706 882 A1**
(43) Date of publication of application: **11.03.2026**
(21) Application number: 24839626.9
(22) Date of filing: 03.07.2024
(51) Int. Cl.: B23Q 11/08, B23B 25/04, B23Q 7/04

(54) **MACHINE TOOL**

(30) Priority: 07.07.2023 JP 2023111897
(71) Applicant: DMG Mori Co., Ltd., Yamatokoriyama-shi, Nara 639-1160 (JP)
(72) Inventor: KURIYA, Tatsuhiko, Yamatokoriyama-shi, Nara 639-1160 (JP); KOMORITA, Kosuke, Yamatokoriyama-shi, Nara 639-1160 (JP); OCHIAI, Takafumi, Yamatokoriyama-shi, Nara 639-1160 (JP)
(74) Representative: Isarpatent
(86) International application number: PCT/JP2024/024149
(87) International publication number: WO 2025/013734

(57) **Abstract**

A machine tool capable of machining a workpiece includes a cover body that defines a machining area for the workpiece. The cover body has a first opening formed in a ceiling thereof for a gantry loader to convey the workpiece to the machining area. The first opening extends in a long-side direction parallel to a conveyance direction of the gantry loader on a horizontal plane. The machine tool includes a lid body provided on the cover body in such a manner as to cover the first opening. The lid body is configured to be attachable to and detachable from the cover body.

## Description

### Technical Field

The present disclosure relates to a machine tool.

### Background Art

JP 2021-30318A (Patent Document 1) discloses a machine tool for which an articulated robot can be easily replaced in accordance with the application. An opening portion is provided in a side surface of a cover of the machine tool, and the articulated robot is configured to be inserted into a machining space through the opening portion. Also, the articulated robot is provided with a lid for closing the opening portion. That is, in a state where the articulated robot is inserted into the opening portion, the lid closes the opening portion.

### Citation List

### Patent Document

Patent Document 1: JP 2021-30318A

### Summary of Invention

### Technical Problem

When conveying a heavier workpiece to a machine tool, a gantry loader is used instead of an articulated robot. There is a customer need to retrofit such a gantry loader to the machine tool. In view of this, there is demand for a technique for easily retrofitting a gantry loader to a machine tool.

### Solution to Problem

In an example of the present disclosure, a machine tool capable of machining a workpiece is provided. The machine tool includes a cover body that defines a machining area for the workpiece. The cover body has a first opening formed in a ceiling thereof for a gantry loader to convey the workpiece to the machining area. The first opening extends in a long-side direction parallel to a conveyance direction of the gantry loader on a horizontal plane. The machine tool includes a lid body provided on the cover body in such a manner as to cover the first opening. The lid body is configured to be attachable to and detachable from the cover body.

In an example of the present disclosure, a width of the lid body in the long-side direction of the first opening is the same as or greater than a width in the long-side direction of the cover body.

In an example of the present disclosure, a second opening is formed in a side surface of the cover body. The machine tool further includes a door provided in such a manner as to cover the second opening. An upper end of the second opening is parallel to the long-side direction.

In an example of the present disclosure, in an elevation view of the machining area as viewed from the door, a surface of the lid body on the machining area side is inclined such that a height thereof decreases toward a back side.

In an example of the present disclosure, the machine tool further includes first and second supporting portions for supporting two ends of the lid body in a short-side direction of the first opening, along the long-side direction. In an elevation view of the machining area as viewed from the door, the first supporting portion is positioned on a front side relative to the second supporting portion. The first supporting portion is further configured to support the door on an opposite side to the lid body.

In an example of the present disclosure, an interface portion for attaching a safety fence is provided on the ceiling of the cover body. In an elevation view of the machining area as viewed from the door, the interface portion is positioned on the back side relative to the door, and is positioned on the front side relative to the first opening, and extends in the long-side direction.

In an example of the present disclosure, the lid body is constituted by a plurality of lids.

In an example of the present disclosure, the plurality of lids include a first lid configured to be openable and closable and a second lid not configured to be openable and closable.

In an example of the present disclosure, the machine tool further includes: a control section; and a sensor for detecting an open or closed state of the first lid. The control section executes processing for prohibiting the machine tool from machining the workpiece when the first lid is in the open state.

In an example of the present disclosure, the machine tool further includes a work spindle for rotationally driving the workpiece. The first lid overlaps the work spindle in a top view.

In an example of the present disclosure, the cover body is provided with an interface portion for attaching the lid body. The interface portion is configured to attach a door, in place of the lid body, to the cover body. The machine tool further includes a drive section for driving the door to open and close, and a control section capable of controlling the drive section. The control section executes processing for opening the door before the gantry loader conveys the workpiece into the machining area, and processing for closing the door after the gantry loader has conveyed the workpiece into the machining area.

In an example of the present disclosure, first and second notch portions are formed in the cover body. As viewed from one side in the long-side direction, the first notch portion overlaps the lid body. As viewed from one side in the long-side direction, the second notch portion overlaps the lid body. The machine tool further includes: a first protective cover provided on the cover body in such a manner as to cover the first notch portion; and a second protective cover provided on the cover body in such a manner as to cover the second notch portion. The first and second protective covers are configured to be attachable to and detachable from the cover body.

In an example of the present disclosure, the first and second protective covers are made of the same material as the cover body.

The above and other objects, features, aspects, and advantages of the present invention will become apparent from the following detailed description of the present invention as understood in connection with the accompanying drawings.

### Brief Description of Drawings

FIG. 1 is a diagram showing the appearance of a machine tool.
FIG. 2 is a diagram showing an example of a device configuration of the machine tool.
FIG. 3 is a diagram showing an example of a device configuration of a machining system.
FIG. 4 is a diagram illustrating the machine tool as viewed from above.
FIG. 5 is a diagram showing a machine tool according to a related technology.
FIG. 6 is a diagram illustrating a lid body as viewed from above.
FIG. 7 is a cross-sectional view taken along the line VII-VII shown in FIG. 6.
FIG. 8 is a diagram illustrating an automatic door as viewed from above.
FIG. 9 is a cross-sectional view taken along the line IX-IX shown in FIG. 8.
FIG. 10 is a diagram illustrating a machine tool as viewed obliquely downward from the front side of machine tool.
FIG. 11 is a diagram showing the machine tool from which the lid body has been removed, as viewed from above.
FIG. 12 is a diagram showing the machine tool to which a safety fence has been attached, as viewed from the front side.
FIG. 13 is a diagram showing the machine tool as viewed from one side in the Z-axis direction.
FIG. 14 is a diagram showing the machine tool as viewed from the other side in the Z-axis direction.
FIG. 15 is a diagram showing an example of a drive mechanism of the machine tool.
FIG. 16 is a diagram showing an example of a drive mechanism for an optional unit.
FIG. 17 is a diagram showing an example of a hardware configuration of a control section.

### Description of Embodiments

Hereinafter, embodiments according to the present invention will be described with reference to the drawings. In the following description, the same members and constituent components are denoted by the same reference numerals. They also have the same names and functions. Accordingly, redundant descriptions thereof will not be repeated. Note that the embodiments and modifications described herein may be selectively combined with each other as appropriate.

### A. Appearance of Machine Tool 100

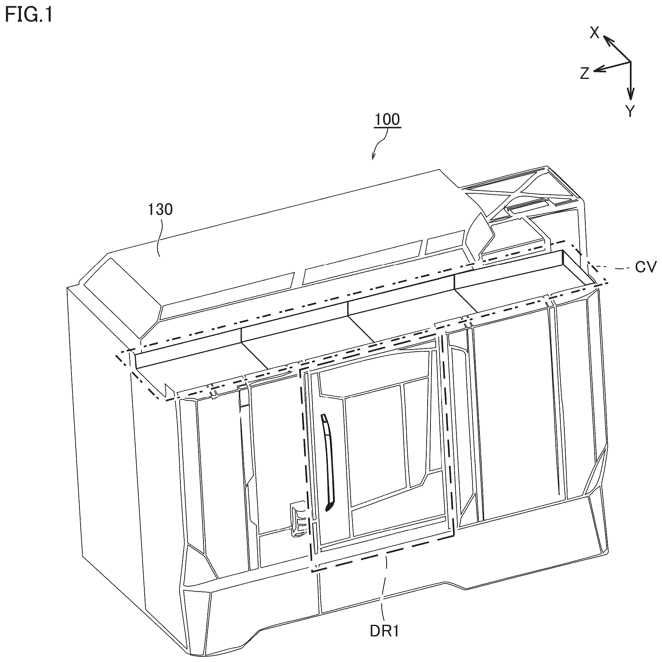

First, a machine tool 100 according to an embodiment of the present disclosure will be described with reference to FIG. 1. FIG. 1 is a diagram showing an example of the appearance of the machine tool 100.

The term "machine tool" used in the present specification is a concept encompassing various devices having a function of machining a workpiece. As an example, the machine tool 100 may be a horizontal machining center or a vertical machining center. Alternatively, the machine tool 100 may be a lathe, an additive machining device, or another cutting machine or grinding machine. Furthermore, the machine tool 100 may be a composite machining device combining these.

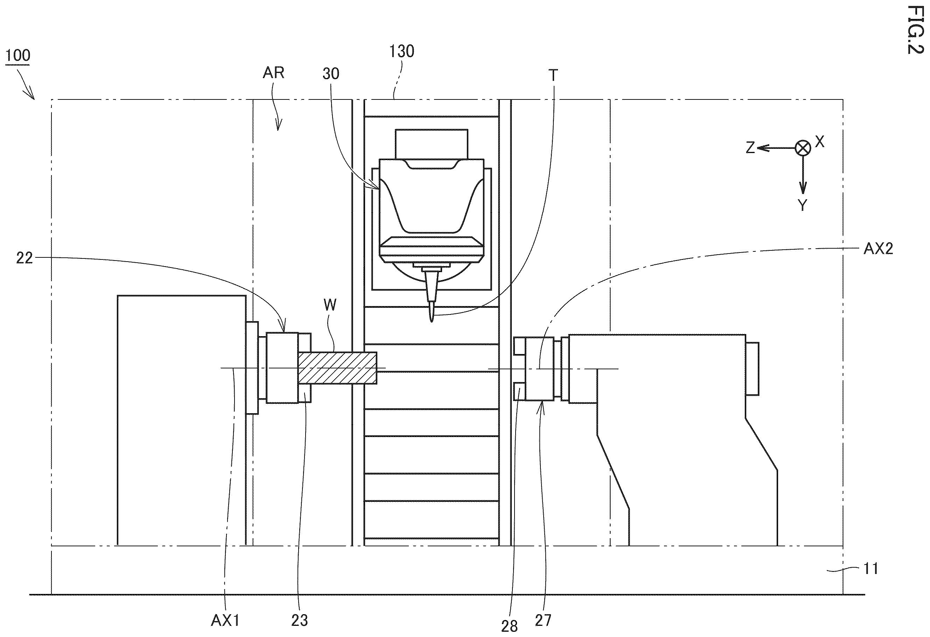

As shown in FIG. 1, the machine tool 100 includes a cover body 130. The cover body 130 is also called a splash guard, and forms the appearance of the machine tool 100 and defines a machining area AR for a workpiece (see FIG. 2).

A lid body CV configured to be attachable to and detachable from the cover body 130 is provided on the ceiling of the cover body 130. The lid body CV will be described later in detail.

A front door DR1 is provided on the front surface of the cover body 130. The front door DR1 is, for example, a sliding door. The front door DR1 may be configured to be openable and closable by a drive source such as a motor, or may be configured to be manually openable and closable. An operator installs a workpiece to be machined in the machining area when the front door DR1 is open. The operator closes the front door DR1 when installation of the workpiece is complete. The workpiece then starts to be machined. Note that operations such as installing a workpiece and opening/closing the door may be automated using an AMR (Autonomous Mobile Robot).

### B. Definition of Directions

Hereinafter, for convenience of description, the horizontal direction leading from the front door DR1 toward the interior (machining area) of the machine tool 100 is also referred to as an X-axis direction. The horizontal direction orthogonal to the X-axis direction is also referred to as a Z-axis direction. The gravity direction orthogonal to both the X-axis and Y-axis directions is also referred to as a Y-axis direction.

### C. Device Configuration of Machine Tool 100

Next, a device configuration of the machine tool 100 will be described with reference to FIG. 2. FIG. 2 is a diagram showing an example of the device configuration of the machine tool 100.

The machine tool 100 includes a bed 11, a first work spindle 22, a second work spindle 27, and a tool spindle 30.

The bed 11 is a base member for supporting various devices provided in the machine tool 100. In the example in FIG. 2, the bed 11 supports the first work spindle 22, the second work spindle 27, and the tool spindle 30. The bed 11 is installed on the floor of a factory or the like. The bed 11 is made of metal such as cast iron.

The first work spindle 22 is configured to be rotatable while holding a workpiece W. More specifically, the first work spindle 22 is provided with a first chuck mechanism 23. The first chuck mechanism 23 is a mechanism for fixing the workpiece W to the first work spindle 22. In addition, the first work spindle 22 is configured to be rotatable about an axis AX1 extending along the axial direction of the first work spindle 22 (i.e., the Z-axis direction).

The second work spindle 27 rotates the workpiece W while supporting the workpiece W from a side opposite to the first work spindle 22. More specifically, the second work spindle 27 is configured to be movable in the Z-axis direction by various drive mechanisms such as motors, and can support the workpiece W from the side opposite to the first work spindle 22. Also, the second work spindle 27 is provided with a second chuck mechanism 28. The second chuck mechanism 28 is a mechanism for fixing the workpiece W to the second work spindle 27. Further, the second work spindle 27 is configured to be rotatable about an axis AX2 extending along the axial direction of the second work spindle 27 (i.e., the Z-axis direction). Typically, the axis AX2 is coaxial with the axis AX1.

The tool spindle 30 is provided at a position higher than the first work spindle 22 and the second work spindle 27. In addition, the tool spindle 30 is provided on the back side relative to the first work spindle 22 and the second work spindle 27 in an elevation view of the machining area AR as viewed from the front door DR1.

The tool spindle 30 is configured to be rotatable while holding a tool T. The tool spindle 30 is configured to be movable in the X-axis, Y-axis, and Z-axis directions by various drive mechanisms such as motors. The tool spindle 30 performs milling machining by bringing the rotating tool T into contact with the workpiece W fixed to the first work spindle 22, for example.

### D. Machining System 10

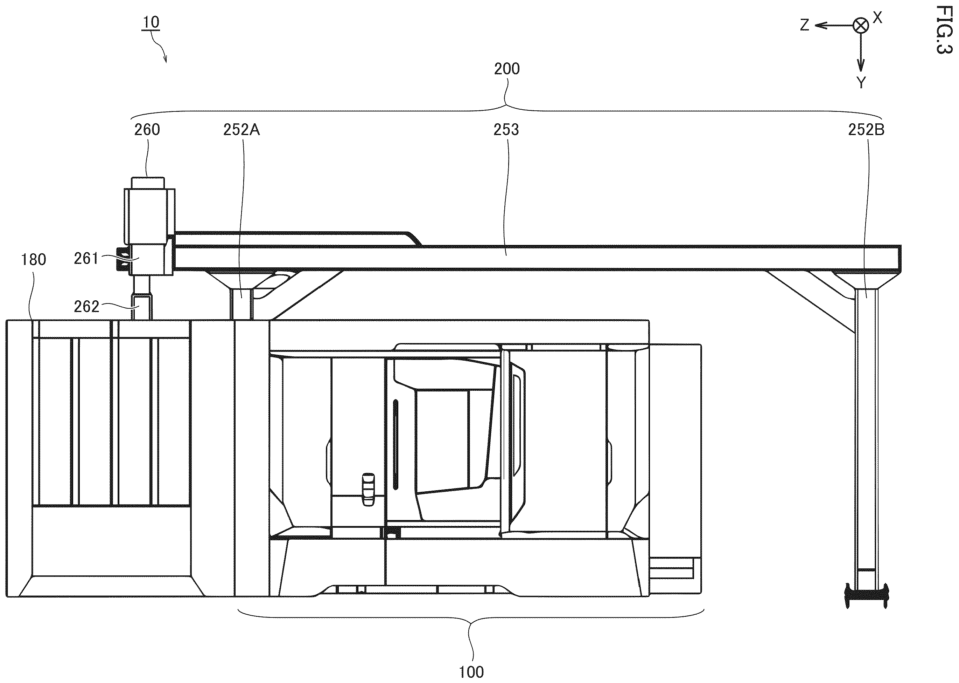

Next, a machining system 10 according to the embodiment will be described. FIG. 3 is a diagram showing an example of a device configuration of the machining system 10.

Various devices can be optionally retrofitted to the machine tool 100 described above with reference to FIG. 1. Examples of devices that can be retrofitted include a workstation 180 and a gantry loader 200. In the example in FIG. 3, a system including the machine tool 100, the gantry loader 200, and the workstation 180 is shown as a machining system 10.

The workstation 180 serves as a place for temporarily placing workpieces before and after machining, and the like. The gantry loader 200 conveys, into the machine tool 100, a workpiece that is placed in the workstation 180 and is to be machined, and conveys the machined workpiece in the machine tool 100 out to the workstation 180.

As an example, the gantry loader 200 is constituted by supporting pillars 252A and 252B, a rail mechanism 253, and a carrier 260.

The supporting pillars 252A and 252B are aligned in the Z-axis direction with the machine tool 100 located therebetween, to support the rail mechanism 253.

The rail mechanism 253 functions as a linear guide for moving the carrier 260 in the Z-axis direction, the linear guide extending linearly in the Z-axis direction.

The carrier 260 is constituted by a slider 261 and a lifting rod 262. The slider 261 is attached to the rail mechanism 253. The slider 261 is configured to be slidable in the Z-axis direction by a drive mechanism such as a motor.

The lifting rod 262 is attached to the slider 261. In addition, the lifting rod 262 is configured to be slidable in the Y-axis direction by a drive mechanism such as a motor. A gripping mechanism for holding a workpiece is provided at the lower end of the lifting rod 262. The gripping mechanism has, for example, an arm shape configured to be able to hold a workpiece.

The gantry loader 200 conveys a workpiece from the workstation 180 into the machine tool 100. More specifically, first, the gantry loader 200 drives the slider 261 in the Z-axis direction, and moves the slider 261 to a position above the workstation 180. Next, the gantry loader 200 drives the lifting rod 262 in the Y-axis direction, and picks up a workpiece that is installed on the workstation 180 and is to be machined. The gantry loader 200 then drives the slider 261 in the Z-axis direction, and moves the slider 261 to a position over the machine tool 100. The gantry loader 200 then drives the lifting rod 262 in the Y-axis direction, and conveys a workpiece to be machined into the machine tool 100. The conveyed workpiece is attached to the first work spindle 22, for example.

The gantry loader 200 also conveys a workpiece from the machine tool 100 to the workstation 180. More specifically, first, the gantry loader 200 drives the lifting rod 262 in the Z-axis direction, and moves the slider 261 to a position above the machine tool 100. Next, the gantry loader 200 drives the lifting rod 262 in the Y-axis direction to pick up the workpiece within the machine tool 100. The gantry loader 200 then drives the slider 261 in the Z-axis direction, and moves the slider 261 to a position over the workstation 180. The gantry loader 200 drives the lifting rod 262 in the Y-axis direction to place the workpiece on the workstation 180.

### E. Overview

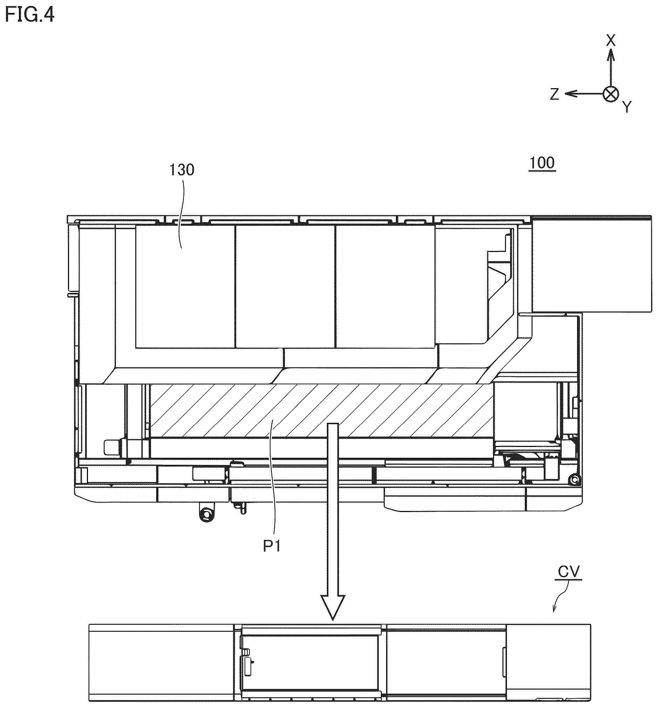

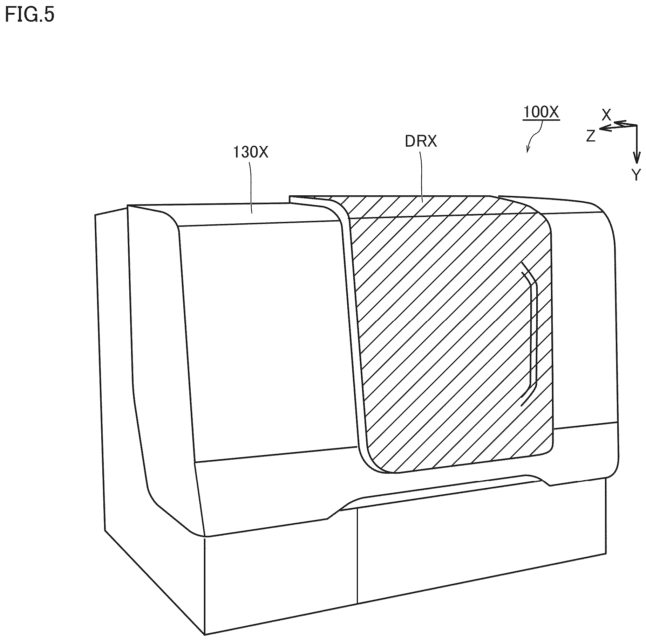

Next, the lid body CV (see FIG. 1) will be described with reference to FIGS. 4 and 5. FIG. 4 is a diagram illustrating the machine tool 100 as viewed from above.

Some customers place an order for the machine tool 100 and then retrofit the gantry loader 200 to the machine tool 100. As an example, a customer attaches the gantry loader 200 to the machine tool 100 at a stage of installing the machine tool 100 in a factory, or attaches the gantry loader 200 to the machine tool 100 in accordance with workpiece production planning, etc. The machine tool 100 according to the embodiment is configured such that the gantry loader 200 is easily retrofitted thereto.

More specifically, an opening P1 (first opening) for the gantry loader 200 to convey the workpiece W to the machining area AR is formed at the ceiling of the cover body 130. The opening P1 is a doorway through which the workpiece W passes when the gantry loader 200 conveys the workpiece W into the machining area AR or when the gantry loader 200 conveys the workpiece W out from the machining area AR. The opening P1 has a band shape and extends in a long-side direction parallel to the conveyance direction (i.e., the Z-axis direction) of the gantry loader 200 on a horizontal plane. In other words, the opening P1 extends parallel to the rail mechanism 253 of the gantry loader 200.

The cover body 130 is provided with the lid body CV such that the opening P1 described above is covered thereby. In other words, the width in the long-side direction (i.e., the Z-axis direction) of the lid body CV is greater than the width in the same direction of the opening P1. In addition, the width in the short-side direction (i.e., the X-axis direction) of the lid body CV is greater than the width in the same direction of the opening P1.

The lid body CV has a band shape. More specifically, the width in the long-side direction (i.e., the Z-axis direction) of the lid body CV is the same as the width in the same direction of the cover body 130. Alternatively, the width in the long-side direction of the lid body CV may be greater than the width in the same direction of the cover body 130. In addition, the width in the short-side direction (i.e., the X-axis direction) of the lid body CV is smaller than the width in the same direction of the cover body 130.

The lid body CV is configured to be attachable to and detachable from the cover body 130. Any mechanism may be adopted as a mechanism for fixing the lid body CV to the cover body 130. As an example, the lid body CV can be screwed to the cover body 130.

Advantages of the lid body CV will be described with reference to FIG. 5. FIG. 5 is a diagram showing a machine tool 100X according to a related technology. The machine tool 100X includes a cover body 130X. A front door DR1X is provided on a side surface of the cover body 130X.

The front door DR1X extends not only over the side surface of the cover body 130X but also to the ceiling of the cover body 130X. When retrofitting the gantry loader 200 to such a machine tool 100X, the customer needs to remove the front door DR1X to replace it with a door adapted for the gantry loader 200. For example, the front door DR1X may be replaced with a front door designed for the gantry loader, such as a front door DRX in which the portion extending to the ceiling of the cover body 130X is small or absent. The customer also needs to replace the cover body 130X with a cover body adapted for the gantry loader 200. That is, there is a need to change the cover body 130X to another cover body designed for the gantry loader 200 or a gantry loader. In this manner, when retrofitting the gantry loader 200 to the machine tool 100X shown in FIG. 5, an extensive modification operation is required.

On the other hand, in the machine tool 100 shown in FIG. 4, only a part (i.e., the lid body CV) related to the conveyance path of the gantry loader 200 is configured to be attachable and detachable. Therefore, when retrofitting the gantry loader 200 to the machine tool 100, the customer does not need to modify parts other than the lid body CV (for example, the front door DR1 and the cover body 130). Accordingly, the customer can save cost and time, and easily retrofit the gantry loader 200 to the machine tool 100.

### F. Lid Body CV

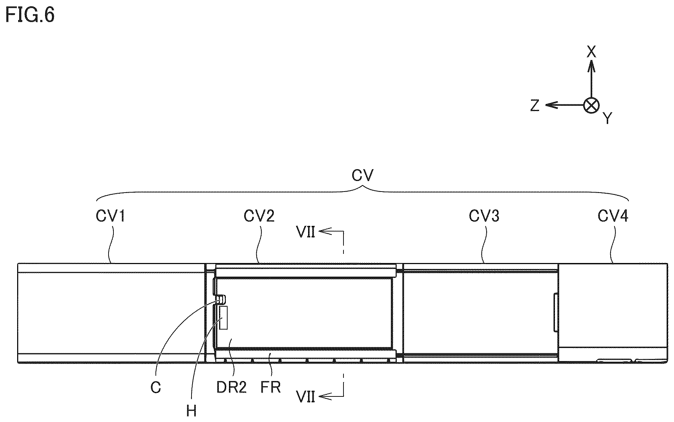

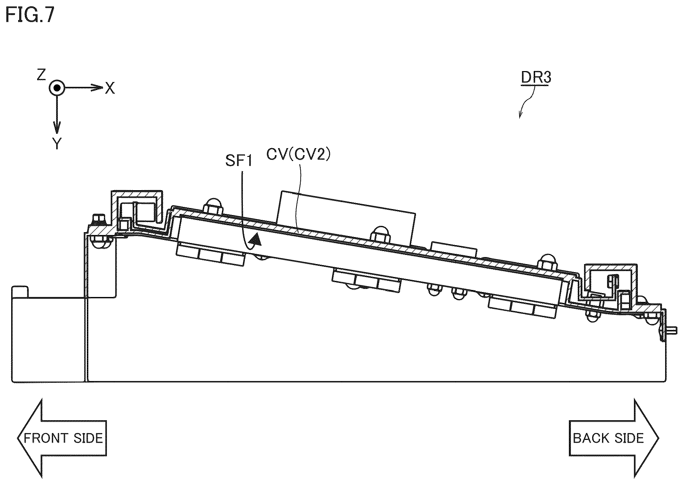

Next, the lid body CV used for closing the opening P1 when the gantry loader 200 shown in FIG. 4 is not in use will be described further in detail with reference to FIGS. 6 and 7. That is, the premise is that the machine tool 100 is in the default state as illustrated in FIG. 1. FIG. 6 is a diagram illustrating the lid body CV as viewed from above. FIG. 7 is a cross-sectional view taken along the line VII-VII shown in FIG. 6.

As shown in FIG. 7, a lower surface (i.e., rear surface) SF1 of the lid body CV on the machining area AR side is inclined such that the height thereof decreases toward the back side, in an elevation view of the machining area AR as viewed from the front door DR1 of the machine tool 100 (see FIG. 1). In other words, among the edge portions of the opening P1 formed in the cover body 130 and having a band shape, the edge portion on the front side of the machine tool 100 is at a higher position than the edge portion on the back side. When a workpiece is machined, coolant is discharged into the machining area AR, and then evaporates. The evaporated coolant liquefies at the ceiling. At this time, the coolant liquefied at the ceiling flows in a direction separating away from the front door DR1 since the lower surface SF1 of the lid body CV is inclined such that the height thereof decreases toward the back side. Accordingly, the coolant liquefied at the ceiling or the coolant that has splashed on a workpiece or the like and adhered to the lower surface SF1 can be prevented from falling onto the operator who has opened the front door DR1.

Preferably, the lid body CV is constituted by a plurality of lids. In the example in FIG. 6, the lid body CV is constituted by four lids CV1 to CV4. The lids CV1 to CV4 are arranged along the Z axis. By the lid body CV being separated into the plurality of lids CV1 to CV4, the operator can easily attach the lid body CV to the machine tool 100.

More preferably, the lid body CV includes the lid CV2 (first lid) configured to be openable and closable, and the lids CV1, CV3, and CV4 (second lids) that are not configured to be openable and closable. The lid CV2 is constituted by a frame FR and a ceiling door DR2.

The ceiling door DR2 is configured to be manually openable and closable. More specifically, a handle H is provided on the surface of the ceiling door DR2 on the opposite side to the machining area AR. In addition, the handle H is provided at an end portion of the ceiling door DR2 on one side in the Z-axis direction. Furthermore, a safety plate (not shown) is attached to the frame FR via hinges or the like. The safety plate is configured to be fixable to the frame FR on the opposite side to the hinge attachment side. The safety plate and the frame FR are fixed to each other, for example, via a bolt. When closing the ceiling door DR2, the operator fixes the safety plate to the frame FR using a bolt. When opening the ceiling door DR2, on the other hand, the operator removes the bolt from the safety plate. The operator then grips the handle H, and slides the ceiling door DR2 in the Z-axis direction. Accordingly, the ceiling door DR2 is opened.

If the workpiece to be machined is light, the customer sets the workpiece in the machining area AR from the front door DR1 (see FIG. 1) of the machine tool 100. On the other hand, if the workpiece to be machined is heavy, the customer uses a crane or the like to lift the workpiece and convey it into the machining area AR through the ceiling door DR2 of the ceiling. In this manner, the customer can switch between the use of the front door DR1 and the ceiling door DR2 in accordance with the weight of the workpiece that is conveyed.

Preferably, the lid CV2 configured to be openable and closable is provided with an open/closed sensor C. The open/closed sensor C is provided near the handle H, for example, and detects the open or closed state of the lid CV2. The open/closed sensor C may be a magnetic sensor, an optical sensor, or an ultrasonic sensor.

When the open/closed sensor C detects the open state of the lid CV2, the machine tool 100 prohibits machining of the workpiece. On the other hand, when the open/closed sensor C detects the closed state of the lid CV2, the machine tool 100 permits machining of the workpiece. Accordingly, the machine tool 100 can prevent machining of the workpiece from being started in a state where the lid CV2 is open.

Preferably, the lid CV2, which can be opened and closed, overlaps at least a portion of the above first work spindle 22 as viewed from above. Accordingly, when conveying the workpiece into the machining area AR through the lid CV2 at the ceiling using a crane or the like, the operator can easily attach the workpiece to the first work spindle 22.

Preferably, the lid CV2, which can be opened and closed, overlaps at least a portion of the above second work spindle 27 as viewed from above. Accordingly, when conveying the workpiece into the machining area AR through the lid CV2 at the ceiling using a crane or the like, the operator can easily attach the workpiece to the second work spindle 27.

### G. Automatic Door DR3

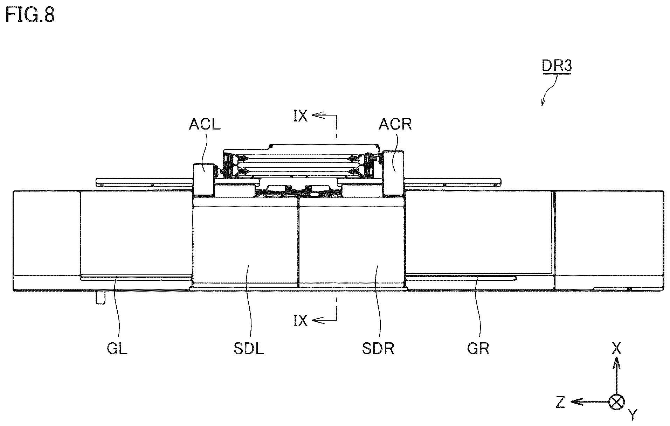

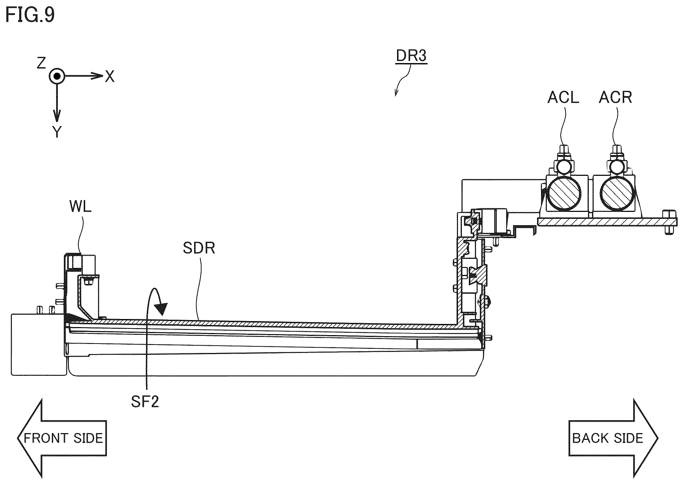

Next, an automatic door DR3 that can be attached to the machine tool 100 in place of the lid body CV will be described with reference to FIGS. 8 and 9. That is, the premise is that the gantry loader 200 is used in the machine tool 100 as shown in FIG. 3. FIG. 8 is a diagram illustrating the automatic door DR3 as viewed from above. FIG. 9 is a cross-sectional view taken along the line IX-IX shown in FIG. 8.

When retrofitting the gantry loader 200 to the machine tool 100, the above lid body CV (see FIG. 4) can be removed from the cover body 130, and, instead, the automatic door DR3 can be attached in such a manner as to cover a portion or the entirety of the opening P1 of the cover body 130. The automatic door DR3 has a band shape, and extends in the Z-axis direction. The automatic door DR3 is driven by drive sections such as air cylinders ACL and ACR.

The machine tool 100 controls opening and closing of the automatic door DR3 in conjunction with the gantry loader 200 conveying the workpiece into the machining area AR. As an example, the machine tool 100 opens the automatic door DR3 before the gantry loader 200 conveys the workpiece into the machining area AR. The gantry loader 200 conveys the workpiece into the machining area AR through the automatic door DR3 in the open state. The machine tool 100 then closes the automatic door DR3. Accordingly, the workpiece is automatically conveyed into the machine tool 100.

The machine tool 100 also controls opening and closing of the automatic door DR3 in conjunction with the gantry loader 200 conveying the workpiece out from the machining area AR. As an example, the machine tool 100 opens the automatic door DR3 before the gantry loader 200 conveys the workpiece out from the machining area AR. The gantry loader 200 conveys the workpiece out from the machining area AR through the automatic door DR3 in the open state. The machine tool 100 then closes the automatic door DR3. Accordingly, the workpiece is automatically conveyed out from the machine tool 100.

The automatic door DR3 is constituted by, for example, a linear guide GL, a linear guide GR, a left door SDL, and a right door SDR.

The linear guide GL is a mechanism for guiding the left door SDL movably in the Z-axis direction. Typically, when opening the automatic door DR3, the machine tool 100 moves the left door SDL along the linear guide GL to the positive side in the Z-axis direction. On the other hand, when closing the automatic door DR3, the machine tool 100 moves the left door SDL along the linear guide GL to the negative side in the Z-axis direction.

The linear guide GR is a mechanism for guiding the right door SDR movably in the Z-axis direction. Typically, when opening the automatic door DR3, the machine tool 100 moves the right door SDR along the linear guide GR to the negative side in the Z-axis direction. On the other hand, when closing the automatic door DR3, the machine tool 100 moves the right door SDR along the linear guide GR to the positive side in the Z-axis direction.

As shown in FIG. 9, the automatic door DR3 is configured such that an upper surface SF2 thereof is lower than the upper surface of the above-described lid body CV. More specifically, a standing wall portion WL raised upright upward from the upper surface SF2 is provided on the front side of the automatic door DR3. Furthermore, in other words, a horizontal cross-sectional shape on the front side of the automatic door DR3 is roughly L-shaped. The upper end portion of this standing wall portion WL is attached to the cover body 130, and the upper surface SF2 is suspended downward, and is disposed at a lower position than the lid body CV. Accordingly, various mechanisms of the gantry loader 200 (such as the rail mechanism 253 and the carrier 260) can be disposed at lower positions, and the conveyance distance of the workpiece in the up-down direction can be shortened. As a result, the workpiece conveyance efficiency by the gantry loader 200 is improved. Note that, as shown in FIG. 9, the lower surface of the automatic door DR3 is also inclined somewhat such that the back side thereof is lower than the front side. Also, since the position of the upper surface SF2 of the automatic door is made low, the inclination angle thereof is smaller compared to the inclination angle of the lid body CV in FIG. 4.

### H. Supporting Portions B1 and B2

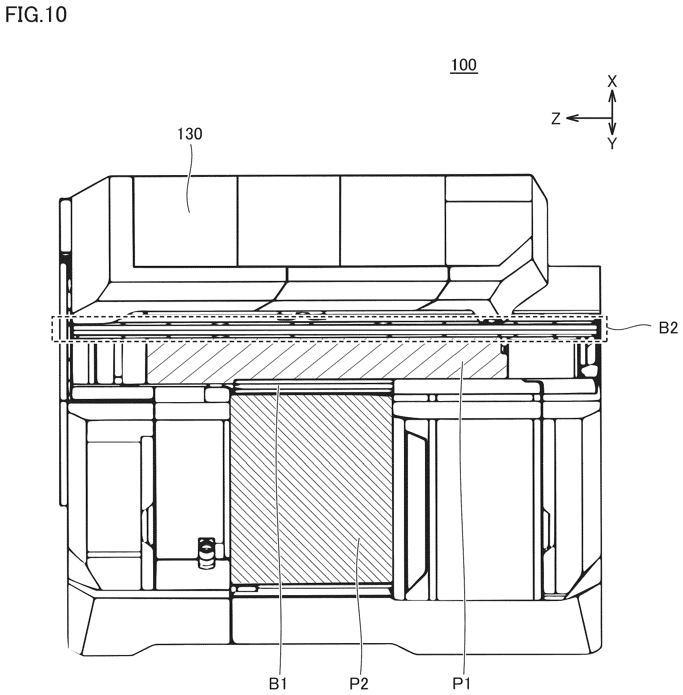

Next, supporting portions B1 and B2 for supporting the above-described lid body CV will be described with reference to FIG. 10. FIG. 10 is a diagram illustrating the machine tool 100 as viewed obliquely downward from the front side of the machine tool 100. Note that a state is illustrated where the lid body CV and the automatic door DR3 have been removed.

In the example in FIG. 10, the lid body CV and the front door DR1 have been removed from the above-described machine tool 100 shown in FIG. 1. In addition, in the example of FIG. 10, the opening P1, which was covered by the lid body CV, and the opening P2, which was covered by the front door DR1, are shown by hatching. As shown in FIG. 10, the upper end of the opening P2 is parallel to the long-side direction of the opening P1.

The cover body 130 of the machine tool 100 is provided with the supporting portions B1 and B2 for supporting the lid body CV. The supporting portions B1 and B2 extend in the long-side direction of the opening P1, and disposed parallel to each other. The supporting portions B1 and B2 have a bar shape, for example. The supporting portion B1 is positioned on the front side relative to the supporting portion B2 in an elevation view of the machining area AR as viewed from the front door DR1.

The supporting portions B1 and B2 are configured to support the two ends of the lid body CV in the short-side direction of the opening P1. Any mechanism may be adopted as the mechanism for fixing the lid body CV to the supporting portions B1 and B2. As an example, the lid body CV can be screwed to the supporting portions B1 and B2.

The supporting portion B1 is configured not only to support the lid body CV, but also to support the front door DR1 on the opposite side to the lid body CV. That is, the lid body CV and the front door DR1 are configured to share the supporting portion B1. The supporting portion B1 guides the front door DR1 movably in the Z-axis direction.

### I. Safety Fence FE

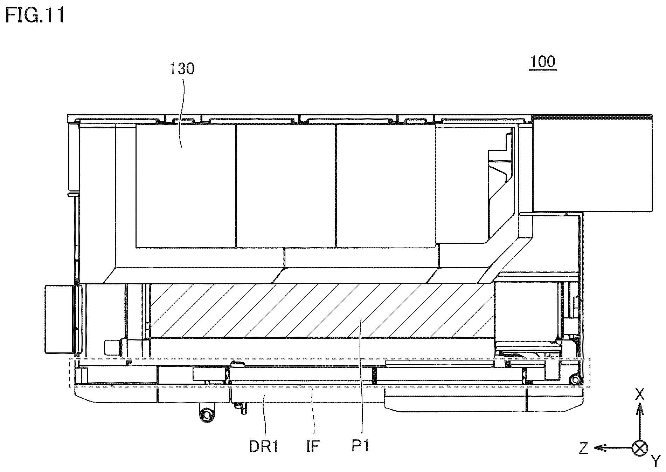

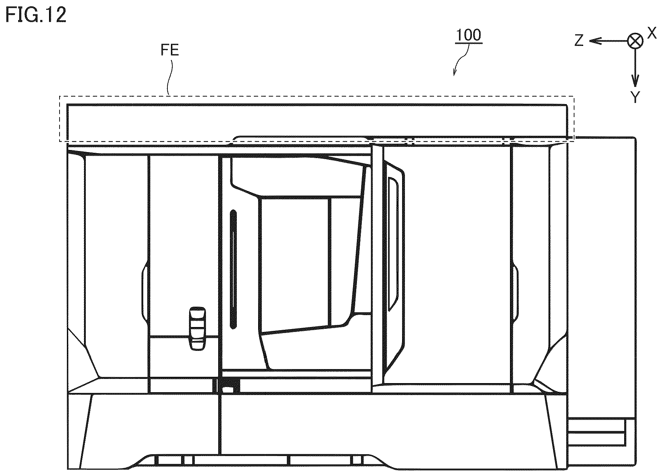

Next, a safety fence FE will be described with reference to FIGS. 11 and 12. FIG. 11 is a diagram showing, as viewed from above, the machine tool 100 from which the lid body CV has been removed. FIG. 12 is a diagram showing, as viewed from the front side, the machine tool 100 to which the safety fence FE has been attached.

When the gantry loader 200 is attached to the machine tool 100 and the height of the machine tool 100 is low, there is the possibility that the operator may touch the gantry loader 200. In view of this, to prevent the operator from touching the gantry loader 200, the machine tool 100 is configured such that the safety fence FE can be attached to the ceiling of the cover body 130.

An interface portion IF for attaching the safety fence FE is formed at the ceiling of the cover body 130. In an elevation view of the machining area AR as viewed from the front door DR1, the interface portion IF is positioned on the back side relative to the front door DR1 and on the front side relative to the opening P1. In addition, the interface portion IF extends in the long-side direction of the opening P1. In addition, an upper surface portion of the interface portion IF is disposed at a lower position than the safety height stipulated in the safety standard that is applied in a case where the gantry loader 200 is installed, for example. In addition, when the gantry loader 200 is not used, the height of the upper surface portion of the interface portion IF satisfies various safety standards and the like. That is to say, by installing the safety fence FE on the interface portion IF, while satisfying the safety standard in a case where the gantry loader 200 is used, the overall height of the machine tool 100 is suppressed by default, enabling a compact configuration.

For example, the safety fence FE is shaped as a plate, and is attached to the interface portion IF while being raised upright. The lower surface of the safety fence FE is fixed to the interface portion IF. Any mechanism may be adopted as a mechanism for fixing the safety fence FE to the interface portion IF. As an example, the interface portion IF is a screw hole. In this case, by fitting a screw into the screw hole of the interface portion IF through the through hole formed in the safety fence FE, the safety fence FE is fixed to the cover body 130.

### J. Protective Cover

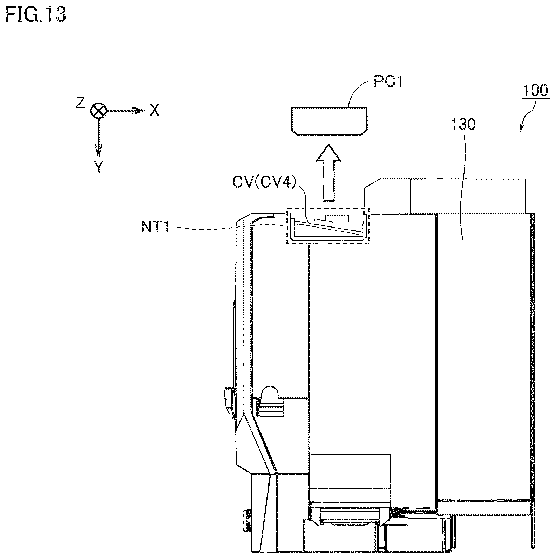

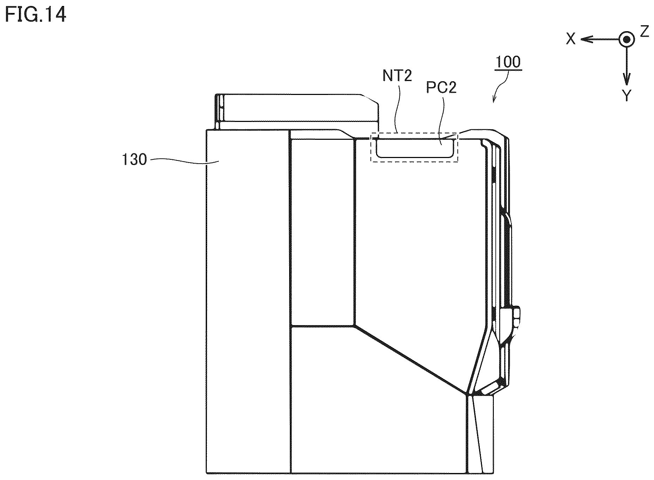

Next, protective covers PC1 and PC2 will be described with reference to FIGS. 13 and 14. FIG. 13 is a diagram showing the machine tool 100 as viewed from one side in the Z-axis direction. FIG. 14 is a diagram showing the machine tool 100 as viewed from the other side of the Z-axis direction.

Notch portions NT1 and NT2 are formed in the cover body 130 of the machine tool 100.

In a side view of the machine tool 100 as viewed from the negative side in the Z-axis direction, the notch portion NT1 is formed in the cover body 130 in such a manner as to overlap the lid body CV. In addition, the protective cover PC1 can be attached to the notch portion NT1. The protective cover PC1 is configured to cover the notch portion NT1. In addition, the protective cover PC1 is configured to be attachable to and detachable from the cover body 130.

Any mechanism may be adopted as a mechanism for fixing the protective cover PC1 to the notch portion NT1 of the cover body 130. As an example, the protective cover PC1 can be screwed to the notch portion NT1 of the cover body 130.

In a side view of the machine tool 100 as viewed from the positive side in the Z-axis direction, the notch portion NT2 is formed in the cover body 130 in such a manner as to overlap the lid body CV. In addition, the protective cover PC2 can be attached to the notch portion NT2. The protective cover PC2 is configured to cover the notch portion NT2. In addition, the protective cover PC2 is configured to be attachable to and detachable from the cover body 130.

Any mechanism may be adopted as a mechanism for fixing the protective cover PC2 to the notch portion NT2 of the cover body 130. As an example, the protective cover PC2 can be screwed to the notch portion NT2 of the cover body 130.

Various machining needs can be met due to the protective covers PC1 and PC2 and the notch portions NT1 and NT2.

As an example, in a case where the above workstation 180 is placed on only one side of the machine tool 100, the gantry loader 200 conveys a workpiece to be machined, out from the workstation 180, and conveys the machined workpiece to the same workstation 180. That is, the workpiece is conveyed out from and to the workstation 180 from the one side in the Z-axis direction of the machine tool 100. In this case, only one of the protective covers PC1 and PC2 that is adjacent to the workstation 180 is removed from the cover body 130. Accordingly, the carrier 260 of the gantry loader 200 can pass one of the notch portions NT1 and NT2. As a result, it is possible to meet a machining need to convey a workpiece to be machined, out from the workstation 180 and convey the machined workpiece to the same workstation 180.

As another example, in a case where the above workstation 180 is placed on each of the two sides in the Z-axis direction of the machine tool 100, the gantry loader 200 conveys a workpiece to be machined, out from the workstation 180 on one side, and conveys the machined workpiece to the workstation 180 on the other side. In this case, both the protective covers PC1 and PC2 are removed from the cover body 130. Accordingly, the carrier 260 of the gantry loader 200 can pass both the notch portions NT1 and NT2. As a result, it is possible to meet a machining need to convey a workpiece to be machined, out from the workstation 180 on the one side, and convey the machined workpiece to the workstation 180 on the other side.

As yet another example, it is also possible to meet a machining need that is realized by aligning a plurality of machine tools 100 in a row in the Z-axis direction. In this case, from among the protective covers PC1 and PC2 of the machine tools 100, protective covers other than the protective covers at the two ends in the Z-axis direction are removed. In addition, a protective cover adjacent to the workstation 180 is also removed from the cover body 130. Accordingly, the carrier 260 of the gantry loader 200 can carry a workpiece to any machine tool 100.

Preferably, the protective cover PC1 is made of the same material as an attachment part of the cover body 130. In addition, the protective cover PC1 is made of a different material from the side surface of the lid body CV on the negative side in the Z-axis direction. Similarly, the protective cover PC2 is made of the same material as an attachment part of the cover body 130. In addition, the protective cover PC2 is made of a different material from the side surface of the lid body CV on the positive side in the Z-axis direction. By the protective covers PC1 and PC2 being made of the same material as the cover body 130, the design of the machine tool 100 is not compromised.

### K. Drive Mechanisms of Machine Tool 100

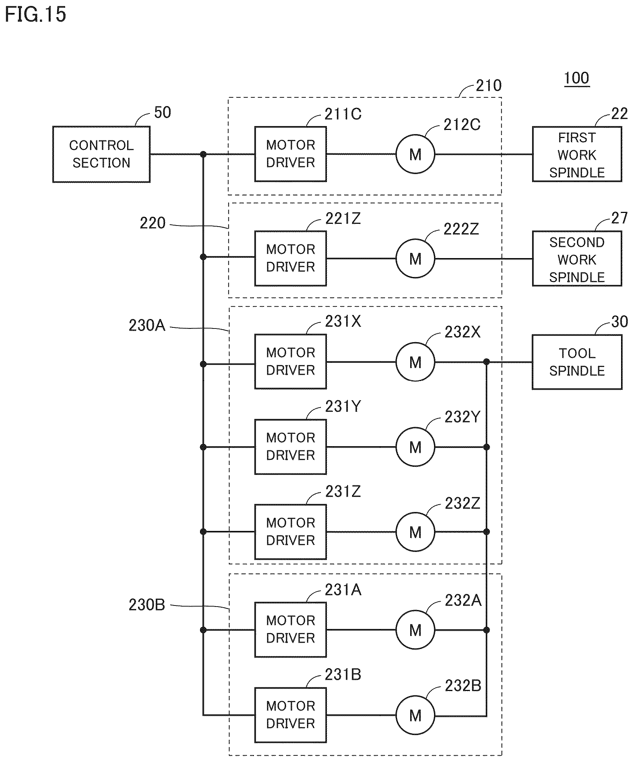

Next, the drive mechanisms of the machine tool 100 will be described with reference to FIG. 15. FIG. 15 is a diagram showing an example of the drive mechanisms of the machine tool 100.

As shown in FIG. 15, the machine tool 100 includes the above-described first work spindle 22, the above-described second work spindle 27, the above-described tool spindle 30, a control section 50, and drive sections 210, 220, 230A, and 230B.

The control section 50 controls various devices constituting the machining system 10 (for example, the machine tool 100). Any configuration may be adopted as a device configuration of the control section 50. The control section 50 may be constituted by a single control unit or a plurality of control units. As an example, the control section 50 includes at least one of a CNC (Computer Numerical Control) and a PLC (Programmable Logic Controller).

The drive section 210 is a drive mechanism for rotationally driving the first work spindle 22. The drive section 210 may be constituted by a single drive unit or a plurality of drive units. In the example in FIG. 15, the drive section 210 is constituted by a motor driver 211C and a motor 212C.

The motor driver 211C successively receives input of a target rotation angle or a target rotation speed of the first work spindle 22, from the control section 50, and outputs a current corresponding to the target rotation angle or the target rotation speed to the motor 212C. Accordingly, the workpiece held by the first work spindle 22 rotates about the Z-axis direction. The motor 212C may be an AC motor, a stepping motor, a servomotor, or another type of motor.

The drive section 220 is a drive mechanism for driving the second work spindle 27. The drive section 220 may be constituted by a single drive unit or a plurality of drive units. In the example in FIG. 15, the drive section 220 is constituted by a motor driver 221Z and a motor 222Z.

The motor driver 221Z successively receives, from the control section 50, input of a target position of the first work spindle 22, and outputs a current corresponding to the target position to the motor 222Z. Accordingly, the motor 222Z moves the second work spindle 27 to a certain position in the Z direction. The motor 222Z may be an AC motor, a stepping motor, a servomotor, or another type of motor.

The drive section 230A is a drive mechanism for moving the tool spindle 30. The drive section 230A may be constituted by a single drive unit or a plurality of drive units. In the example in FIG. 15, the drive section 230A is constituted by motor drivers 231X to 231Z and motors 232X to 232Z.

The motor driver 231X successively receives, from the control section 50, input of a target position in the X-axis direction of the tool spindle 30, and outputs a current corresponding to the target position to the motor 232X. Accordingly, the motor 232X drives the tool spindle 30 to a certain position in the X direction. The motor 232X may be an AC motor, a stepping motor, a servomotor, or another type of motor.

The motor driver 231Y successively receives, from the control section 50, input of a target position in the Y-axis direction of the tool spindle 30, and outputs a current corresponding to the target position to the motor 232Y. Accordingly, the motor 232Y drives the tool spindle 30 to a certain position in the Y direction. The motor 232Y may be an AC motor, a stepping motor, a servomotor, or another type of motor.

The motor driver 231Z successively receives, from the control section 50, input of a target position in the Z-axis direction of the tool spindle 30, and outputs a current corresponding to the target position to the motor 232Z. Accordingly, the motor 232Z moves the tool spindle 30 to a certain position in the Z direction. The motor 232Z may be an AC motor, a stepping motor, a servomotor, or another type of motor.

The drive section 230B is a drive mechanism for rotationally driving the tool spindle 30. The drive section 230B may be constituted by a single drive unit or a plurality of drive units. In the example in FIG. 15, the drive section 230B is constituted by motor drivers 231A and 231B and motors 232A and 232B.

The motor driver 231A successively receives, from the control section 50, input of a target rotation angle or a target rotation speed of the tool spindle 30 about the X-axis direction, and outputs a current corresponding to the target rotation angle or the target rotation speed to the motor 232A. The motor 232A drives the tool spindle 30 to rotate about the X-axis direction. The motor 232A may be an AC motor, a stepping motor, a servomotor, or another type of motor.

The motor diver 231B successively receives, from the control section 50, input of a target rotation angle or a target rotation speed of the tool spindle 30 about the axial direction of the tool spindle 30, and outputs a current corresponding to the target rotation angle or the target rotation speed to the motor 232B. The motor 232B drives the tool spindle 30 to rotate about the axial direction of the tool spindle 30. The motor 232B may be an AC motor, a stepping motor, a servomotor, or another type of motor.

### L. Drive Mechanisms for Optional Units

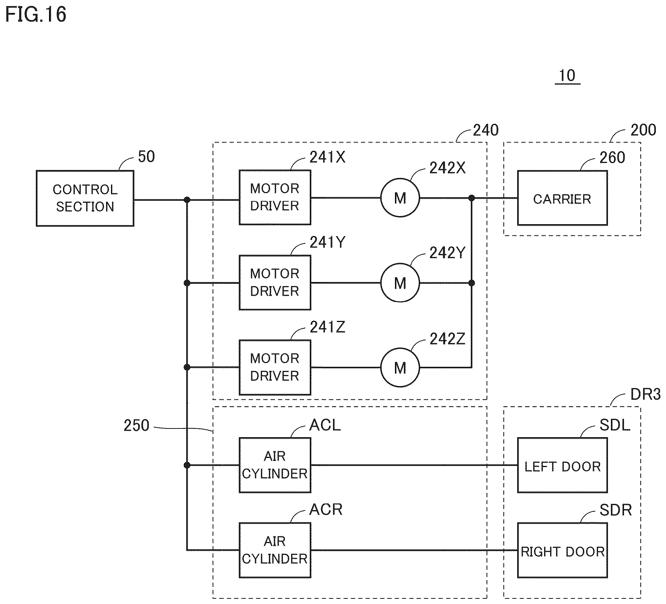

Next, drive mechanisms of optional units that can be retrofitted to the machine tool 100 will be described with reference to FIG. 16. FIG. 16 is a diagram showing an example of drive mechanisms of optional units. FIG. 16 shows, as examples of optional units, the carrier 260 of the gantry loader 200 and the automatic door DR3.

As shown in FIG. 16, the machining system 10 includes the above-described gantry loader 200, the above-described automatic door DR3, the above-described control section 50, and drive sections 240 and 250.

The drive section 240 is a drive mechanism for moving the carrier 260 of the gantry loader 200. The drive section 240 may be constituted by a single drive unit or a plurality of drive units. In the example in FIG. 16, the drive section 240 is constituted by motor drivers 241X to 241Z and motors 242X and 242Z.

The motor driver 241X successively receives, from the control section 50, input of a target position in the X-axis direction of the carrier 260, and outputs a current corresponding to the target position to the motor 242X. Accordingly, the motor 242X drives the carrier 260 to any position in the X-axis direction. The motor 242X may be an AC motor, a stepping motor, a servomotor, or another type of motor.

The motor driver 241Y successively receives, from the control section 50, input of a target position in the Y-axis direction of the carrier 260, and outputs a current corresponding to the target position to the motor 242Y. Accordingly, the motor 242Y drives the carrier 260 to any position in the Y-axis direction. The motor 242Y may be an AC motor, a stepping motor, a servomotor, or another type of motor.

The motor driver 241Z successively receives, from the control section 50, input of a target position in the Z-axis direction of the carrier 260, and outputs a current corresponding to the target position to the motor 242Z. Accordingly, the motor 242Z drives the carrier 260 to any position in the Z-axis direction. The motor 242Z may be an AC motor, a stepping motor, a servomotor, or another type of motor.

The drive section 250 is a drive mechanism for opening and closing the automatic door DR3. The drive section 250 may be constituted by a single drive unit or a plurality of drive units. In the example in FIG. 16, the drive section 250 is constituted by an air cylinder ACL and an air cylinder ACR. Note that the drive section 250 may be constituted by drive motors such as servomotors.

The air cylinder ACL drives the left door SDL in the Z-axis direction in accordance with a control instruction from the control section 50. The air cylinder ACR drives the right door SDR in the Z-axis direction in accordance with a control instruction from the control section 50.

### M. Hardware Configuration of Control Section 50

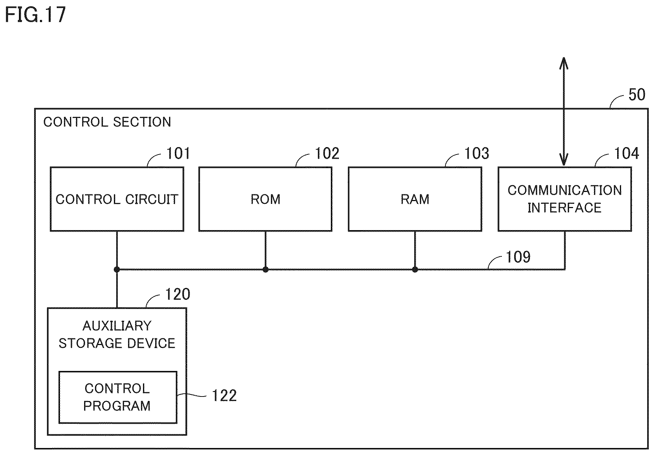

Next, a hardware configuration of the above-described control section 50 shown in FIGS. 15 and 16 will be described with reference to FIG. 17. FIG. 17 is a diagram showing an example of the hardware configuration of the control section 50.

The control section 50 includes a control circuit 101, a ROM (Read Only Memory) 102, a RAM (Random Access Memory) 103, a communication interface 104, and an auxiliary storage device 120. These components are connected to an internal bus 109.

The control circuit 101 is constituted by at least one integrated circuit, for example. The integrated circuit can be constituted by at least one CPU, at least one GPU (Graphics Processing Unit), at least one ASIC (Application Specific Integrated Circuit), at least one FPGA (Field Programmable Gate Array), or a combination thereof, for example.

The control circuit 101 controls the operation of the control section 50 by executing various programs such as a control program 122. Based on an instruction to execute the control program 122 being accepted, the control circuit 101 loads the control program 122 from the auxiliary storage device 120 or the ROM 102 to the RAM 103. The RAM 103 functions as a working memory, and temporarily stores various types of data required for executing the control program 122.

The communication interface 104 is an interface for performing periodic communication with an external apparatus using a field network. As the field network, for example, EtherCAT (registered trademark), EtherNet/IP (registered trademark), CC-Link (registered trademark), CompoNet (registered trademark), or the like is adopted.

The auxiliary storage device 120 is a storage medium such as a hard disk or a flash memory. The auxiliary storage device 120 stores the control program 122 and the like. Note that the storage location of the control program 122 is not limited to the auxiliary storage device 120, and the control program 122 may be stored in the storage area of the control circuit 101 (for example, cache memory), the ROM 102, the RAM 103, an external apparatus (for example, a server), or the like.

In addition, the control program 122 may be provided as a part of any program, not as a standalone program. In this case, various types of processing according to the present embodiment is realized in cooperation with any program. Even a program does not include such partial modules does not deviate from the spirit of the control program 122 according to the present embodiment. Furthermore, some or all of the functions provided by the control program 122 may be realized by dedicated hardware. Furthermore, the control section 50 may be configured in a form such as that of a so-called cloud service in which at least one server executes a portion of the processing of the control program 122.

### O. Modified Example

FIG. 4 described above shows the opening P1 having a rectangular shape, but the opening P1 may have any shape extending in the long-side direction parallel to the conveyance direction of the gantry loader 200 on the horizontal plane. As an example, the opening P1 may have a rectangular shape, and the length in the X-axis direction of the opening P1 may vary depending on the position thereof in the Z-axis direction.

In addition, the above FIG. 4 shows the lid body CV having a rectangular shape, but the lid body CV may have any shape that can cover the opening P1. As an example, the shape of the lid body CV may be a polygon such as a square or a hexagon.

Furthermore, in the above example in FIG. 6, an example has been described in which the lid body CV is provided with a ceiling door DR, but the lid body CV does not necessarily need to be provided with a door. As an example, the lid body CV may be a plate that merely covers the opening P1.

Furthermore, in the above example in FIG. 7, an example has been described in which the lid body CV is provided on the cover body 130 while being inclined in the X-axis direction, but the lid body CV does not necessarily need to be inclined. As an example, the lid body CV may be provided on the cover body 130 in parallel to a horizontal plane. As another example, the lid body CV may be provided on the cover body 130 while being inclined in the Z-axis direction.

Furthermore, in the above examples in FIGS. 8 and 9, an example has been described in which the automatic door DR3 is opened only when the gantry loader 200 conveys the workpiece W out from and into the machine tool 100, but the mode of opening/closing control of the automatic door DR3 is not limited thereto. As an example, in a case where the machine tool 100 machines a workpiece without using coolant, the automatic door DR3 may always be open.

Furthermore, in the above example in FIG. 12, an example has been described in which the safety fence FE is retrofitted to the interface portion IF to achieve a height that complies with safety standards, but, when the safety standards are satisfied without retrofitting the safety fence FE, the safety fence FE does not need to be retrofitted to the cover body 130 of the machine tool 100. In addition, the interface portion IF also does not need to be provided on the cover body 130.

The embodiments disclosed herein are to be considered illustrative in all respects and not restrictive. The scope of the present invention is defined not by the above descriptions but by the claims, and is intended to encompass all modifications within the meanings and scope that are equivalent to the claims.

### List of Reference Numerals

10: Machining system, 11: Bed, 22: First work spindle, 23: First chuck mechanism, 27: Second work spindle, 28: Second chuck mechanism, 30: Tool spindle, 50: Control section, 100: Machine tool, 100X: Machine tool, 101: Control circuit, 102: ROM, 103: RAM, 104: Communication interface, 109: Internal but, 120: Auxiliary storage device, 122: Control program, 130: Cover body, 130X: Cover body, 180: Workstation, 200: Gantry loader, 210: Drive section, 211C: Motor driver, 212C: Motor, 220: Drive section, 221Z: Motor driver, 222Z: Motor, 230A: Drive section, 230B: Drive section, 231A: Motor driver, 231B: Motor driver, 231X: Motor driver, 231Y: Motor driver, 231Z: Motor driver, 232A: Motor, 232B: Motor, 232X: Motor, 232Y: Motor, 232Z: Motor, 240: Drive section, 241X: Motor driver, 241Y: Motor driver, 241Z: Motor driver, 242X: Motor, 242Y: Motor, 242Z: Motor, 250: Drive section, 252A: Supporting pillar, 252B: Supporting pillar, 253: Rail mechanism, 260: Carrier, 261: Slider, 262: Lifting rod, ACL: Air cylinder, ACR: Air cylinder, AR: Machining area, AX1: Axis, AX2: Axis, B1: Supporting portion, B2: Supporting portion, C: Open/closed sensor, CV: Lid body, CV1: Lid, CV2: Lid, CV3: Lid, CV4: Lid, DR1: Front door, DR2: Ceiling door, DR3: Automatic door, DRX: Front door, FE: Safety fence, FR: Frame, GL: Linear guide, GR: Linear guide, H: Handle, IF: Interface portion, NT1: Notch portion, NT2: Notch portion, P1: Opening, P2: Opening, PC1: Protective cover, PC2: Protective cover, SDL: Left door, SDR: Right door, SF1: Lower surface, SF2: Upper surface, T: Tool, W: Workpiece, WL: Standing wall portion

## Claims

1. A machine tool capable of machining a workpiece, comprising:
a cover body that defines a machining area for the workpiece, the cover body having a first opening formed in a ceiling thereof for a gantry loader to convey the workpiece to the machining area, the first opening extending in a long-side direction parallel to a conveyance direction of the gantry loader on a horizontal plane; and
a lid body provided on the cover body in such a manner as to cover the first opening, the lid body being configured to be attachable to and detachable from the cover body.

2. The machine tool according to claim 1,
wherein a width of the lid body in the long-side direction of the first opening is the same as or greater than a width in the long-side direction of the cover body.

3. The machine tool according to claim 2,
wherein a second opening is formed in a side surface of the cover body,
the machine tool further includes a door provided in such a manner as to cover the second opening, and
an upper end of the second opening is parallel to the long-side direction.

4. The machine tool according to claim 2 or 3,
wherein, in an elevation view of the machining area as viewed from the door, a surface of the lid body on the machining area side is inclined such that a height thereof decreases toward a back side.

5. The machine tool according to claim 2 or 3, further comprising
first and second supporting portions for supporting two ends of the lid body in a short-side direction of the first opening, along the long-side direction,
in an elevation view of the machining area as viewed from the door, the first supporting portion is positioned on a front side relative to the second supporting portion, and
the first supporting portion is further configured to support the door on an opposite side to the lid body.

6. The machine tool according to claim 2 or 3,
wherein an interface portion for attaching a safety fence is provided on the ceiling of the cover body, and
in an elevation view of the machining area as viewed from the door, the interface portion is positioned on the back side relative to the door, and is positioned on the front side relative to the first opening, and extends in the long-side direction.

7. The machine tool according to any one of claims 1 to 3,
wherein the lid body is constituted by a plurality of lids.

8. The machine tool according to claim 7,
wherein the plurality of lids include a first lid configured to be openable and closable and a second lid not configured to be openable and closable.

9. The machine tool according to claim 8, further comprising:
a control section; and
a sensor for detecting an open or closed state of the first lid,
wherein the control section executes processing for prohibiting the machine tool from machining the workpiece when the first lid is in the open state.

10. The machine tool according to claim 8, further comprising
a work spindle for rotationally driving the workpiece,
wherein the first lid overlaps the work spindle in a top view.

11. The machine tool according to any one of claims 1 to 3,
wherein the cover body is provided with an interface portion for attaching the lid body,
the interface portion is configured to attach a door, in place of the lid body, to the cover body,
the machine tool further includes:
a drive section for driving the door to open and close; and
a control section capable of controlling the drive section, and
the control section executes:
processing for opening the door before the gantry loader conveys the workpiece into the machining area; and
processing for closing the door after the gantry loader has conveyed the workpiece into the machining area.

12. The machine tool according to claim 2 or 3,
wherein first and second notch portions are formed in the cover body,
as viewed from one side in the long-side direction, the first notch portion overlaps the lid body,
as viewed from one side in the long-side direction, the second notch portion overlaps the lid body, and
the machine tool further includes:
a first protective cover provided on the cover body in such a manner as to cover the first notch portion; and
a second protective cover provided on the cover body in such a manner as to cover the second notch portion, the first and second protective covers being configured to be attachable to and detachable from the cover body.

13. The machine tool according to claim 12,
wherein the first and second protective covers are made of the same material as the cover body.
